# EUROPEAN PATENT APPLICATION

(11) **EP 4 170 585 A1**
(43) Date of publication of application: **26.04.2023**
(21) Application number: 21826160.0
(22) Date of filing: 03.06.2021
(51) Int. Cl.: G06T 7/00

(54) **FACE STRUCTURE ESTIMATION DEVICE, FACE STRUCTURE ESTIMATION METHOD, AND FACE STRUCTURE ESTIMATION PROGRAM**

(30) Priority: 19.06.2020 JP 2020106437
(71) Applicant: Kyocera Corporation, Kyoto-shi Kyoto 612-8501 (JP)
(72) Inventor: KIM Jaechul, Kyoto-shi, Kyoto 612-8501 (JP); HAYASHI Yusuke, Kyoto-shi, Kyoto 612-8501 (JP)
(74) Representative: Viering, Jentschura & Partner mbB Patent- und Rechtsanwälte
(86) International application number: PCT/JP2021/021272
(87) International publication number: WO 2021/256287

(57) **Abstract**

A facial structure estimation apparatus includes a controller 13. The controller 13 stores, as learning data, a parameter indicating a relationship between a face image and a structure of the face image. The controller 13 learns a relationship between a first face image and a facial structure corresponding to the first face image. The controller 13 learns a relationship between a second face image of a certain person and a facial structure corresponding to the second face image. The controller 13 learns a relationship between a second face image of the certain person detected using infrared light and a facial structure corresponding to the second face image.

## Description

### CROSS-REFERENCE TO RELATED APPLICATIONS

The present disclosure claims priority to Japanese Patent Application No. 2020-106437 filed on June 19, 2020, the entire contents of which are incorporated herein by reference.

### TECHNICAL FIELD

The present invention relates to a facial structure estimation apparatus, a method for estimating a facial structure, and a program for estimating a facial structure.

### BACKGROUND OF INVENTION

Apparatuses that execute various functions in accordance with a state of a driver inside a vehicle, such as one that urges a sleepy occupant to take a break or that initiates autonomous driving, for example, are being examined. Such an apparatus needs to recognize a state of an occupant in a simple manner. Recognition of a state of a person, such as an occupant, based on estimation of a facial structure, which changes in accordance with the state, is being examined. For example, estimation of a facial structure based on a face image achieved by deep learning is known (refer to Patent Literature 1).

### CITATION LIST

### PATENT LITERATURE

Patent Literature 1: International Publication No. 2019-176994

### SUMMARY

In order to solve the above problems, in a first aspect, a facial structure estimation apparatus is a facial structure estimation apparatus including an estimator.

The estimator stores, as learning data, a parameter indicating a relationship between a face image and a structure of the face image.

The estimator learns a relationship between a first face image including RGB information and a facial structure corresponding to the first face image, a relationship between a second face image of a certain person including RGB information and a facial structure corresponding to the second face image, and a relationship between a second face image of the certain person detected using infrared light and a facial structure corresponding to the second face image.

In another aspect, a facial structure estimation apparatus includes an obtainer and a controller.

The obtainer obtains a first face image including a component in a first band and a second face image including a component in a second band.

The controller outputs a facial structure of the second face image.

The controller functions as an identifier, a general estimator, a general evaluator, a first person estimator, a dedicated evaluator, and a second person estimator.

The identifier identifies a person in the second face image obtained by the obtainer on the basis of the second face image.

The general estimator estimates a facial structure of the first face image obtained by the obtainer on the basis of the first face image.

The general evaluator calculates validity of the facial structure estimated by the general estimator.

The first person estimator is constructed by causing the general estimator to estimate facial structures of first face images of a new target obtained by the obtainer on the basis of the first face images and the general evaluator to calculate validities of the facial structures, selecting facial structures whose validities are equal to or higher than a first threshold, and performing learning using the selected facial structures and the first face images corresponding to the selected facial structures.

The dedicated evaluator performs learning using facial structures estimated by the first person estimator on the basis of the first face images corresponding to the selected facial structures and validities calculated by the general evaluator on the basis of the facial structures and the first face images corresponding to the facial structures.

The second person estimator is constructed for the new target by causing the first person estimator to estimate facial structures of second face images of the new target obtained by the obtainer on the basis of the second face images and the dedicated evaluator to calculate validities of the facial structures, selecting facial structures whose validities are equal to higher than a second threshold, and performing learning using the selected facial structures and the second face images corresponding to the facial structures and, when the person in the second face image, which is obtained by the obtainer, identified by the identifier is the new target after the construction, estimates and outputs a facial structure on the basis of the second face image.

In a second aspect, a method for estimating a facial structure includes a first learning step, a second learning step, and a third learning step.

In the first learning step, an estimator storing, as learning data, a parameter indicating a relationship between a face image and a structure of the face image learns a relationship between a first face image including RGB information and a facial structure corresponding to the first face image.

In the second learning step, the estimator learns a relationship between a second face image of a certain person including RGB information and a facial structure corresponding to the second face image.

In the third learning step, the estimator learns a relationship between a second face image of the certain person detected using infrared light and a facial structure corresponding to the second face image.

In another aspect, a method for estimating a facial structure includes
obtaining a first face image including a component in a first band and a second face image including a component in a second band, and
outputting a facial structure of the second face image.

The outputting includes
identifying a person in the second face image obtained in the obtaining step on the basis of the second face image,
estimating a facial structure of the first face image obtained in the obtaining on the basis of the first face image,
calculating validity of the facial structure estimated in the estimating a facial structure,
estimating facial structures of first face images of a new target obtained in the obtaining on the basis of the first face images, calculating validities of the facial structures, selecting facial structures whose validities are equal to or higher than a first threshold, and performing learning using the selected facial structures and the first face images corresponding to the selected facial structures,
performing learning using facial structures estimated in the estimating facial structures on the basis of the first face images corresponding to the selected facial structures and validities calculated in the calculating on the basis of the facial structures and the first face images corresponding to the facial structures, and
estimating, for the new target, facial structures of second face images of the new target obtained in the obtaining on the basis of the second face images, calculating validities of the facial structures, selecting facial structures whose validities are equal to higher than a second threshold, performing learning using the selected facial structures and the second face images corresponding to the facial structures, and estimating and outputting, when the person in the second face image, which is obtained in the obtaining, identified in the identifying is the new target after the construction, a facial structure on the basis of the second face image.

In a third aspect, a program for estimating a facial structure causes an estimator indicating a parameter indicating a relationship between a first face image including RGB information and a facial structure corresponding to the first face image to perform a process including a first learning step, a second learning step, and a third learning step.

In the first learning step, the relationship between a first face image including RGB information and a facial structure corresponding to the first face image is learned.

In the second learning step, a relationship between a second face image of a certain person including RGB information and a facial structure corresponding to the second face image is learned.

In the third learning step, a relationship between a second face image of the certain person detected using infrared light and a facial structure corresponding to the second face image is learned.

In another aspect, a program for estimating a facial structure causes a computer to include an obtainer and a controller.

The obtainer obtains a first face image including a component in a first band and a second face image including a component in a second band.

The controller outputs a facial structure of the second face image.

The controller functions as an identifier, a general estimator, a first person estimator, a dedicated evaluator, and a second person estimator.

The identifier identifies a person in the second face image obtained by the obtainer on the basis of the second face image.

The general estimator estimates a facial structure of the first face image obtained by the obtainer on the basis of the first face image.

The general evaluator calculates validity of the facial structure estimated by the general estimator.

The first person estimator is constructed by causing the general estimator to estimate facial structures of first face images of a new target obtained by the obtainer on the basis of the first face images and the general evaluator to calculate validities of the facial structures, selecting facial structures whose validities are equal to or higher than a first threshold, and performing learning using the selected facial structures and the first face images corresponding to the selected facial structures.

The dedicated evaluator performs learning using facial structures estimated by the first person estimator on the basis of the first face images corresponding to the selected facial structures and validities calculated by the general evaluator on the basis of the facial structures and the first face images corresponding to the facial structures.

The second person estimator is constructed for the new target by causing the first person estimator to estimate facial structures of second face images of the new target obtained by the obtainer on the basis of the second face images and the dedicated evaluator to calculate validities of the facial structures, selecting facial structures whose validities are equal to higher than a second threshold, and performing learning using the selected facial structures and the second face images corresponding to the facial structures and, when the person in the second face image, which is obtained by the obtainer, identified by the identifier is the new target after the construction, estimates and outputs a facial structure on the basis of the second face image.

### BRIEF DESCRIPTION OF THE DRAWINGS

FIG. 1 is a block diagram illustrating a schematic configuration of a facial structure estimation apparatus according to the present embodiment.
FIG. 2 is a block diagram illustrating a schematic configuration of functional blocks constructed in a controller illustrated in FIG. 1.
FIG. 3 is a conceptual diagram illustrating learning for primarily constructing a general estimator illustrated in FIG. 2.
FIG. 4 is a conceptual diagram illustrating a method for calculating a validity used as a correct answer based on a facial structure and a labeled facial structure, the method being performed by the general estimator illustrated in FIG. 2.
FIG. 5 is a conceptual diagram illustrating learning for primarily constructing a general evaluator illustrated in FIG. 2.
FIG. 6 is a conceptual diagram illustrating generation of a combination of a face image and a virtual labeled facial structure for secondarily constructing the general estimator illustrated in FIG. 2.
FIG. 7 is a conceptual diagram illustrating learning for secondarily constructing the general estimator illustrated in FIG. 2.
FIG. 8 is a conceptual diagram illustrating a method for calculating a validity used as a correct answer based on a facial structure and a virtual labeled facial structure, the method being performed by the general estimator illustrated in FIG. 2.
FIG. 9 is a conceptual diagram illustrating learning for secondarily constructing the general evaluator illustrated in FIG. 2.
FIG. 10 is a conceptual diagram illustrating learning for constructing an identifier illustrated in FIG. 2.
FIG. 11 is a conceptual diagram illustrating generation of a combination of a face image and a virtual labeled facial structure for constructing a first person estimator illustrated in FIG. 2.
FIG. 12 is a conceptual diagram illustrating learning for constructing the first person estimator illustrated in FIG. 2.
FIG. 13 is a conceptual diagram illustrating a method for calculating a validity used as a correct answer based on a facial structure and a virtual labeled facial structure, the method being performed by the first person estimator illustrated in FIG. 2.
FIG. 14 is a conceptual diagram illustrating learning for constructing a dedicated evaluator illustrated in FIG. 2.
FIG. 15 is a conceptual diagram illustrating generation of a combination of a face image and a virtual labeled facial structure for constructing a second person estimator illustrated in FIG. 2.
FIG. 16 is a conceptual diagram illustrating learning for constructing the second person estimator illustrated in FIG. 2.
FIG. 17 is a first flowchart illustrating a construction process performed by the controller illustrated in FIG. 1.
FIG. 18 is a second flowchart illustrating the construction process performed by the controller illustrated in FIG. 1.
FIG. 19 is a flowchart illustrating an estimation process performed by the controller illustrated in FIG. 1.

### DESCRIPTION OF EMBODIMENTS

An embodiment of a facial structure estimation apparatus to which the present disclosure is applied will be described hereinafter with reference to the drawings. The following description of the embodiment of the facial structure estimation apparatus to which the present disclosure is applied also serves as description of embodiments of a method for estimating a facial structure and a program for estimating a facial structure to which the present disclosure is applied.

In the embodiment of the present disclosure, the facial structure estimation apparatus is provided, for example, in mobile objects. The mobile objects may include, for example, vehicles, ships, and aircraft. The vehicles may include, for example, automobiles, industrial vehicles, railroad vehicles, vehicles for daily living, and fixed-wing aircraft that run on a runway. The automobiles may include, for example, passenger vehicles, trucks, buses, two-wheeled vehicles, and trolleybuses. The industrial vehicles may include, for example, industrial vehicles for agricultural and construction purposes. The industrial vehicles may include, for example, forklifts and golf carts. The industrial vehicles for agricultural purposes may include, for example, tractors, cultivators, transplanters, binders, combines, and lawn mowers. The industrial vehicles for construction purposes may include, for example, bulldozers, scrapers, excavators, cranes, dump trucks, and road rollers. The vehicles may include ones powered by a human. Classifications of the vehicles are not limited to the above example. For example, the automobiles may include industrial vehicles that can run on a road. A plurality of classifications may include the same vehicle. The ships may include, for example, marine jets, boats, and tankers. The aircraft may include, for example, fixed-wing aircraft and rotary-wing aircraft.

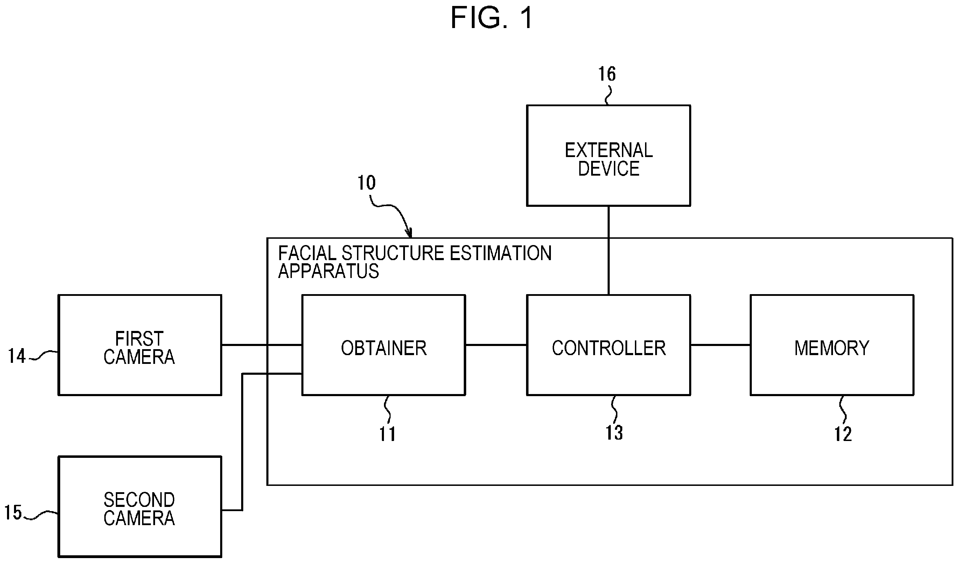

As illustrated in FIG. 1, in the embodiment of the present disclosure, a facial structure estimation apparatus 10 includes an obtainer 11, a memory 12, and a controller 13.

The obtainer 11 obtains, for example, a first face image, which is an image of an occupant's face captured by a first camera 14. The first camera 14 is capable of capturing, for example, an image of a component in a first band, which is at least a part of a visible light range including primary colors such as RGB or complementary colors. The first face image, therefore, includes the component in the first band. The obtainer 11 obtains, for example, a second face image, which is an image of an occupant's face captured by a second camera 15. The second camera 15 is capable of capturing, for example, an image of a component in a second band, which is at least a part of an infrared range such as near-infrared and different from the first band. The second face image, therefore, includes the component in the second band. The second camera 15 may radiate light in the second band onto an imaging target.

The first camera 14 and the second camera 15 are mounted, for example, at positions from which images of an area around a face of an occupant, who is in a mobile object at a certain position, such as on a driver's seat, can be captured. The first camera 14 and the second camera 15 capture face images at, say, 30 fps.

The memory 12 includes, for example, any storage devices such as a RAM (random-access memory) and a ROM (read-only memory). The memory 12 stores various programs for causing the controller 13 to function and various pieces of information used by the controller 13.

The controller 13 includes one or more processors and a memory. The processors may include a general-purpose processor that reads a certain program and that executes a certain function and a dedicated processor specialized in certain processing. The dedicated processor may include an application-specific integrated circuit (ASIC). The processors may include a programable logic device (PLD). The PLD may include an FPGA (field-programmable gate array). The controller 13 may be an SoC (system-on-a-chip), in which one or more processors cooperate with one another, or a SiP (system in a package). The controller 13 controls an operation of each of the components of the facial structure estimation apparatus 10.

The controller 13 normally causes the second camera 15 to capture images. The controller 13 outputs a facial structure of a second face image obtained by the obtainer 11 to an external device 16. A facial structure is a feature for identifying a facial expression or the like that changes in accordance with a state of a person. A facial structure is, for example, a set of points defined on a contour of a face, such as a jaw, a set of points defined on contours of eyes, such as inner and outer canthi, a set of points defined on a bridge of a nose from a tip to a root, and the like.

As described later, when images of a new occupant (target) are to be captured, the controller 13 causes the first camera 14 and the second camera 15 to capture images at 30 fps, for example, to obtain a plurality of first face images and a plurality of second face images. The controller 13 performs learning, using the first face images and the second face images of the new occupant, such that a facial structure of the new occupant can be estimated.

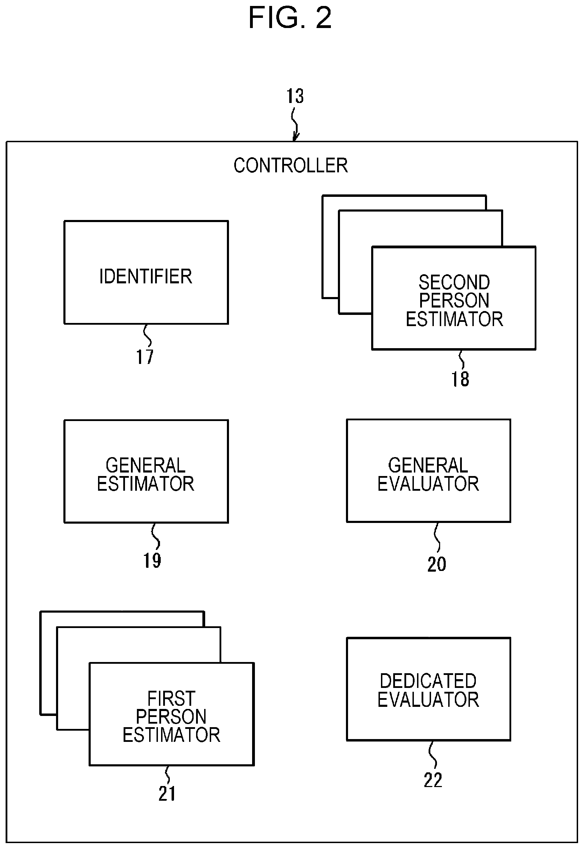

The outputting and learning of a facial structure performed by the controller 13 will be described in detail hereinafter. As illustrated in FIG. 2 and described later, the controller 13 functions as an identifier 17, second person estimators 18, a general estimator 19, a general evaluator 20, first person estimators 21, and a dedicated evaluator 22.

The identifier 17 identifies a person in a second face image obtained by the obtainer 11 on the basis of the second face image. The identifier 17 is, for example, a multilayer neural network. As described later, the identifier 17 is constructed by performing supervised learning.

As described later, the second person estimators 18 are each constructed for a person. A second person estimator 18 corresponding to a person identified by the identifier 17 on the basis of second face images is selected from the constructed second person estimators 18. The second person estimator 18 estimates a facial structure of the person on the basis of the second face images used by the identifier 17 for the identification. The controller 13 outputs the facial structure estimated by the second person estimator 18. The second person estimators 18 are, for example, multilayer neural networks. As described later, the second person estimators 18 are constructed by performing supervised learning.

The general estimator 19 estimates a facial structure of a first face image of an unspecified person obtained by the obtainer 11 on the basis of the first face image. As described later, the general estimator 19 is used to construct the first person estimators 21 and the dedicated evaluator 22. The general estimator 19 is, for example, a multilayer neural network. As described later, the general estimator 19 is constructed by performing supervised learning.

The general evaluator 20 calculates a validity of a first facial structure estimated by the general estimator 19. As described later, the general evaluator 20 is used to construct the first person estimators 21 and the dedicated evaluator 22. The general evaluator 20 is, for example, a multilayer neural network. The general evaluator 20 is constructed by performing supervised learning.

As described later, the first person estimators 21 are each constructed for a person. A first person estimator 21 corresponding to a person identified by the identifier 17 on the basis of second face images is selected from the constructed first person estimators 21. The first person estimator 21 estimates facial structures of the second face images used by the identifier 17 for the identification on the basis of the second face images. As described later, the first person estimators 21 are used to construct the second person estimators 18 and the dedicated evaluator 22. The first person estimators 21 are, for example, multilayer neural networks. As described later, the first person estimators 21 are constructed by performing supervised learning.

The dedicated evaluator 22 calculates, through estimation, validities of facial structures estimated by the first person estimators 21. As described later, the dedicated evaluator 22 is used to construct the second person estimators 18 and the dedicated evaluator 22. The dedicated evaluator 22 is, for example, a multilayer neural network. The dedicated evaluator 22 is constructed by performing supervised learning.

The supervised learning performed for the identifier 17, the second person estimators 18, the general estimator 19, the general evaluator 20, the first person estimators 21, and the evaluator 23 will be described hereinafter. In order to construct the general estimator 19 and the general evaluator 20, supervised learning is performed when the facial structure estimation apparatus 10 is manufactured. When the facial structure estimation apparatus 10 is used, therefore, the facial structure estimation apparatus 10 has already learned the general estimator 19 and the general evaluator 20. The general estimator 19 and the general evaluator 20 may be constructed for one facial structure estimation apparatus 10, and another facial structure estimation apparatus 10 may store data for constructing the general estimator 19 and the general evaluator 20. In order to construct the identifier 17, the first person estimators 21, the dedicated evaluator 22, and the second person estimators 18, supervised learning is performed while the facial structure estimation apparatus 10 is being used.

The construction of the general estimator 19 and the general evaluator 20 will be described hereinafter. In the construction of the general estimator 19 and the general evaluator 20 through machine learning, a plurality of combinations of a first face image and a labeled facial structure for the first face image is used. A labeled facial structure is a facial structure that is a correct answer for a first face image. A labeled facial structure is created by human judgment, for example, on the basis of the above-described definition.

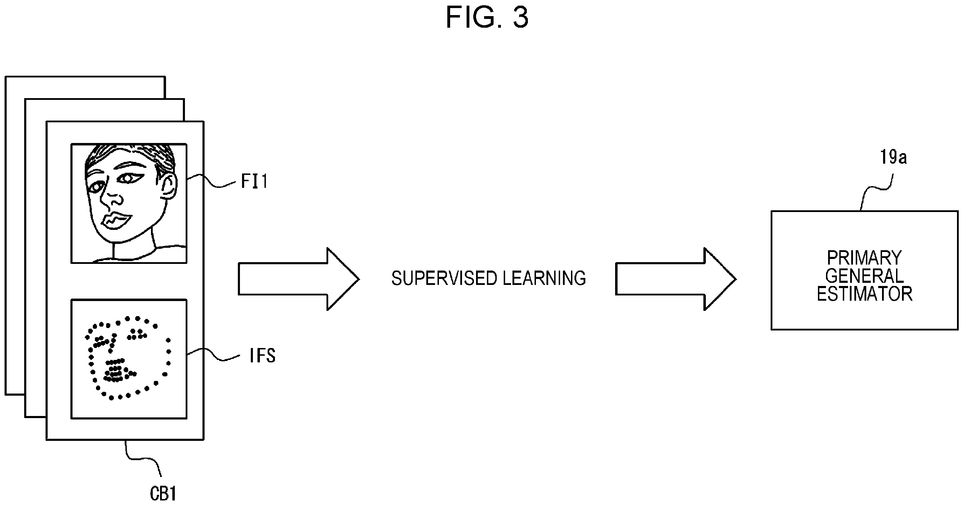

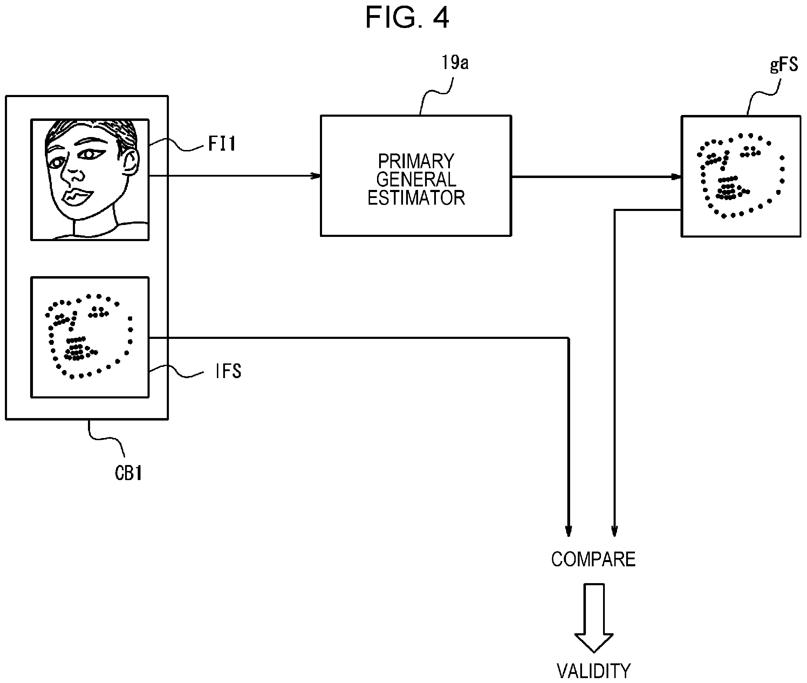

As illustrated in FIG. 3, a primary general estimator 19a is constructed by performing supervised learning using labeled facial structures lFS as correct answers for first face images FI1. As illustrated in FIG. 4, the constructed primary general estimator 19a estimates facial structures gFS from first face images FI1 included in a plurality of combinations CB1.

The controller 13 calculates validities of the estimated facial structures gFS using labeled facial structures IFS corresponding to the first face images FI1 used to estimate the facial structures gFS. A validity is a degree of matching between an estimated facial structure gFS and a labeled facial structure IFS. For example, a calculated validity becomes lower as distances between points included in an estimated facial structure gFS and points included in a labeled facial structure lFS become larger, and higher as the distances become closer to zero.

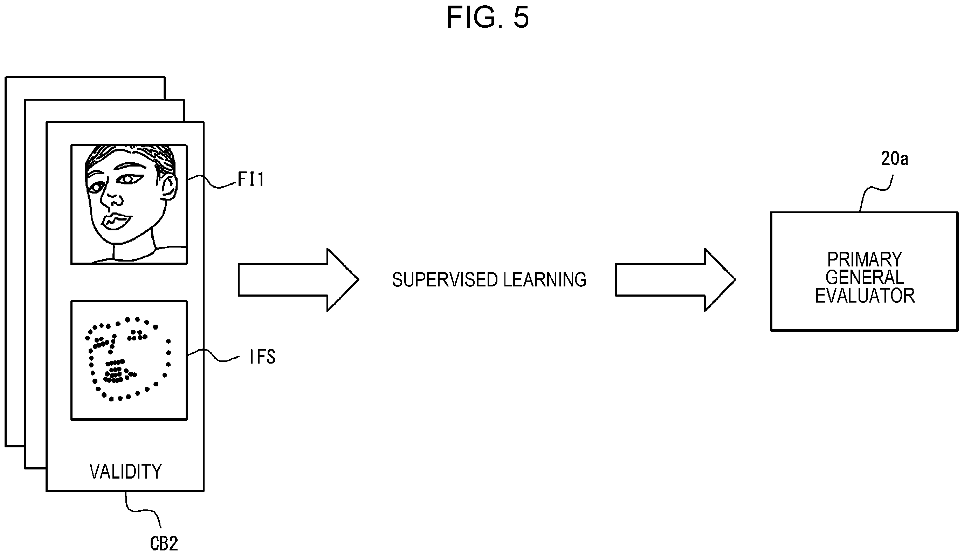

As illustrated in FIG. 5, a plurality of combinations CB2 of a first face image FI1, a labeled facial structure IFS, and a validity is used to construct a primary general evaluator 20a. The primary general evaluator 20a is constructed by performing supervised learning using the validities as correct answers for the corresponding first face images FI1 and the corresponding labeled facial structures IFS.

The primary general estimator 19a may be subjected to further machine learning. Simple first face images FI1 without labeled facial structures lFS are used in the further machine learning for the primary general estimator 19a.

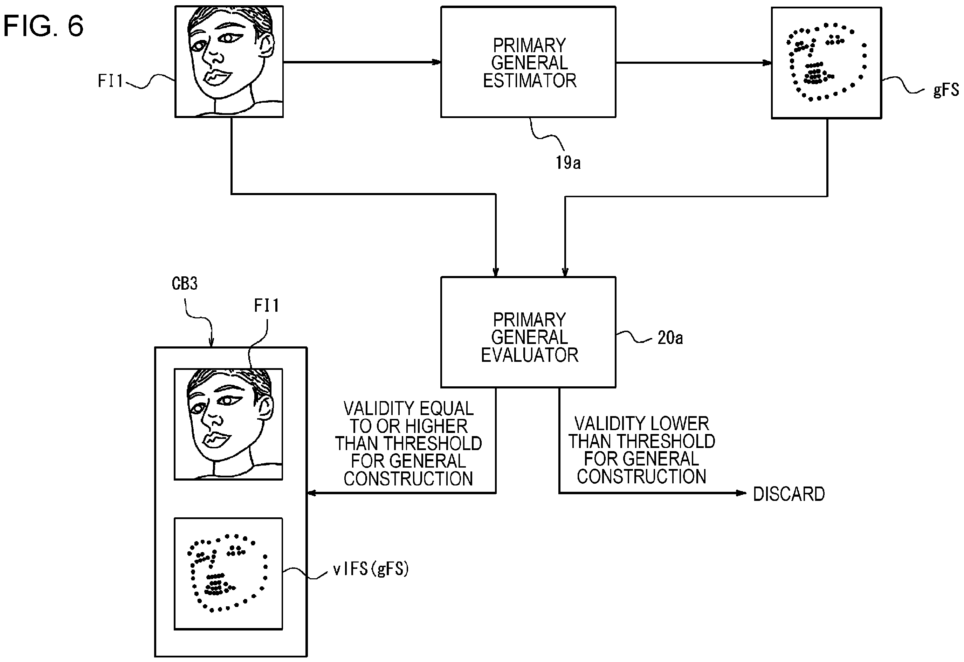

As illustrated in FIG. 6, the primary general estimator 19a estimates a facial structure gFS of a first face image FI1 for the further machine learning on the basis of the first face image FI1. The primary general evaluator 20a calculates a validity of the estimated facial structure gFS on the basis of the first face image FI1 and the estimated facial structure gFS. If the calculated validity is equal to or higher than a threshold for general construction, the estimated facial structure gFS is combined with the first face image FI1 as a virtual labeled facial structure vlFS. Facial structures gFS are estimated using first face images FI1 more than first face images FI1 with true labeled facial structures IFS, and combinations CB3 of a virtual labeled facial structure vlFS and a first face image FI1 are generated.

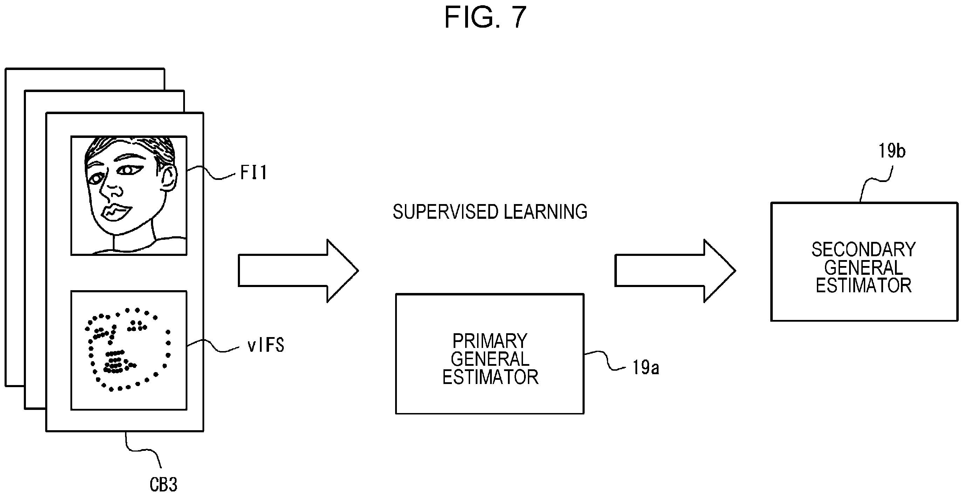

As illustrated in FIG. 7, a secondary general estimator 19b is constructed by performing supervised learning on the primary general estimator 19a using the plurality of combinations CB3 of a first face image FI1 and a virtual labeled facial structure vlFS. When the secondary general estimator 19b is constructed, data for constructing the secondary general estimator 19b is generated, and the controller 13 functions as the general estimator 19 on the basis of the data. When the secondary general estimator 19b is not constructed, data for constructing the primary general estimator 19a is generated, and the controller 13 functions as the general estimator 19 on the basis of the data.

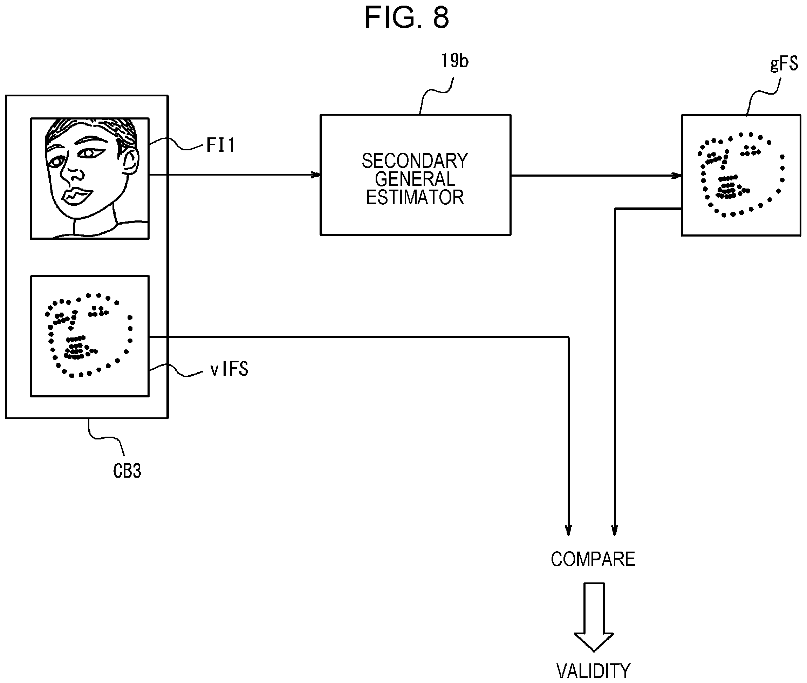

The primary general evaluator 20a may be subjected to further machine learning. Combinations CB3 of a first face image FI1 and a virtual labeled facial structure vlFS are used for the further machine learning for the primary general evaluator 20a. As illustrated in FIG. 8, the secondary general estimator 19b estimates, for the further machine learning, facial structures gFS of first face images FI1 combined with virtual labeled facial structures vlFS on the basis of the first face images FI1. Validities of the estimated facial structures gFS are calculated using the virtual labeled facial structures vlFS corresponding to the first face images FI1.

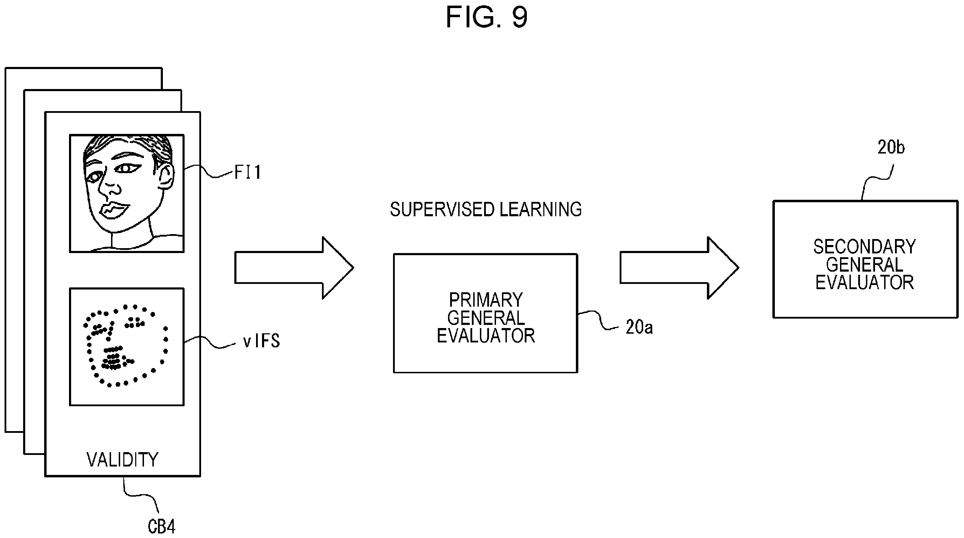

As illustrated in FIG. 9, a secondary general evaluator 20b is constructed by performing supervised learning on the primary general evaluator 20a using a plurality of combinations CB4 of a first face image FI1, a virtual labeled facial structure vlFS, and a validity. When the secondary general evaluator 20b is constructed, data for constructing the secondary general evaluator 20b is generated, and the controller 13 functions as the general evaluator 20 on the basis of the data. When the secondary general evaluator 20b is constructed, data for constructing the primary general evaluator 20a is generated, and the controller 13 functions as the general evaluator 20 on the basis of the data.

The construction of the identifier 17 will be described hereinafter. When the second camera 15 captures images of a new occupant (target), for example, machine learning for constructing the identifier 17 is performed. When the identifier 17 cannot identify a person in second face images or an inputter of the facial structure estimation apparatus 10 detects an input indicating that there is a new occupant, the controller 13 determines that the second camera 15 has captured images of a new occupant, and starts machine learning.

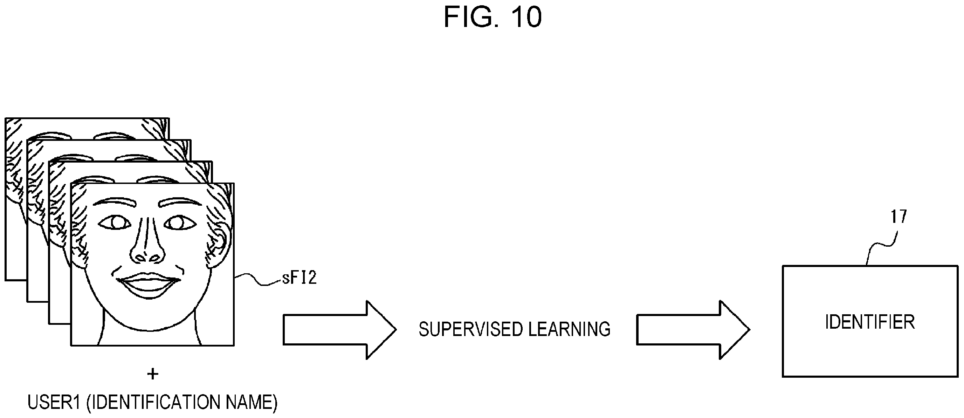

As illustrated in FIG. 10, the identifier 17 is constructed in such a way as to be able to identify a certain person by performing machine learning using a newly created identification name as a current answer for a plurality of second face images sFI2 of the certain person. Each time the second camera 15 captures images of a new occupant, the identifier 17 is subjected to supervised learning and constructed in such way as to be able to identify a plurality of persons learned thereby so far. Each time an identifier 17 is constructed, data for constructing the identifier 17 is generated, and the controller 13 functions as an updated identifier 17 on the basis of the data.

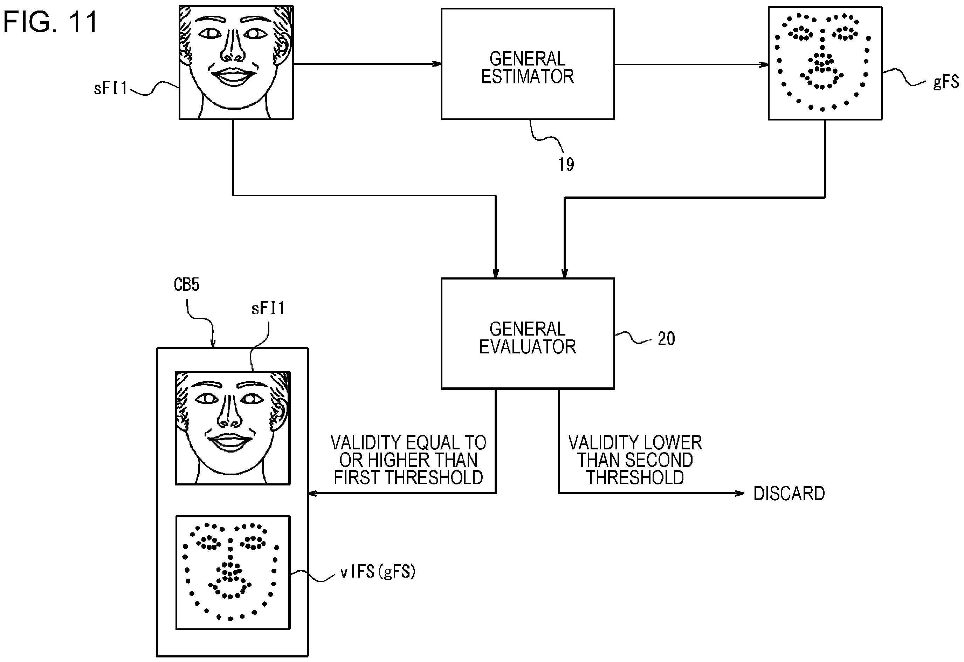

The construction of the first person estimators 21 will be described hereinafter. As described above, when the second camera 15 captures images of a new occupant, a first person estimator 21 corresponding to the new occupant is newly constructed. As described above, in order to construct the first person estimator 21, the controller 13 causes the first camera 14 to generate first face images sFI1 of the new occupant. As illustrated in FIG. 11, the general estimator 19 estimates facial structures gFS of the first face images sFIq of the new occupant on the basis of the first face images sFI1.

The general evaluator 20 calculates validities of the estimated facial structures gFS on the basis of the corresponding first face images sFI1 of the new occupant and the corresponding estimated facial structures gFS. First face images sFI1 and facial structures gFS with which calculated validities are equal to or higher than a first threshold are selected. The first threshold may be the same as or different from the threshold for general construction. A plurality of combinations CB5 is generated by combining the selected facial structures gFS with the corresponding first face images sFI1 as virtual labeled facial structures vlFS.

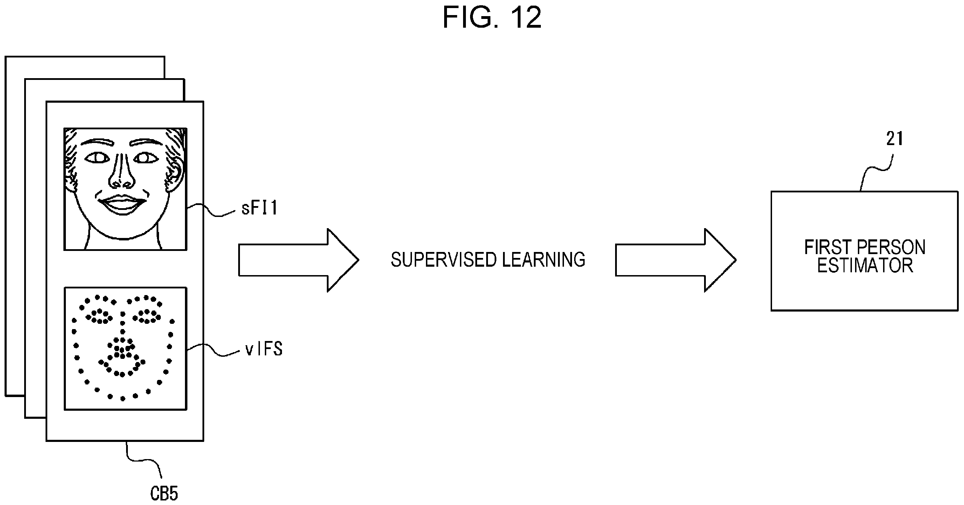

As illustrated in FIG. 12, a first person estimator 21 corresponding to a new occupant is constructed by performing supervised learning using a facial structure vlFS as a correct answer for a first face image sFI1 in each of the plurality of generated combinations CB5. After the first person estimator 21 corresponding to the new occupant is constructed, data for constructing the first person estimator 21 is generated, and the controller 13 functions as the first person estimator 21 on the basis of the data.

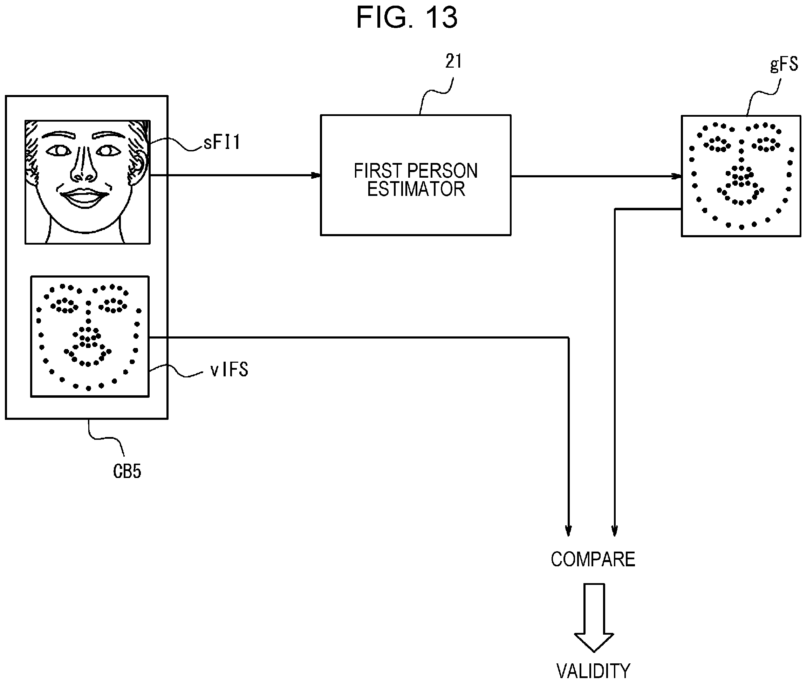

The construction of the dedicated evaluator 22 will be described hereinafter. Each time a first person estimator 21 is constructed, a dedicated evaluator 22 is constructed or updated in such a way as to be able to calculate a validity of a new occupant corresponding to the first person estimator 21. As illustrated in FIG. 13, in order to construct the dedicated evaluator 22, the constructed first person estimator 21 estimates facial structures gFS of first face images sFI1 of the new occupant in a plurality of combinations CB5 used to learn the first person estimator 21 on the basis of the first face images sFI1. The general evaluator 20 calculates validities of the estimated facial structures gFS using virtual labeled facial structures vlFS corresponding to the first face images sFI1.

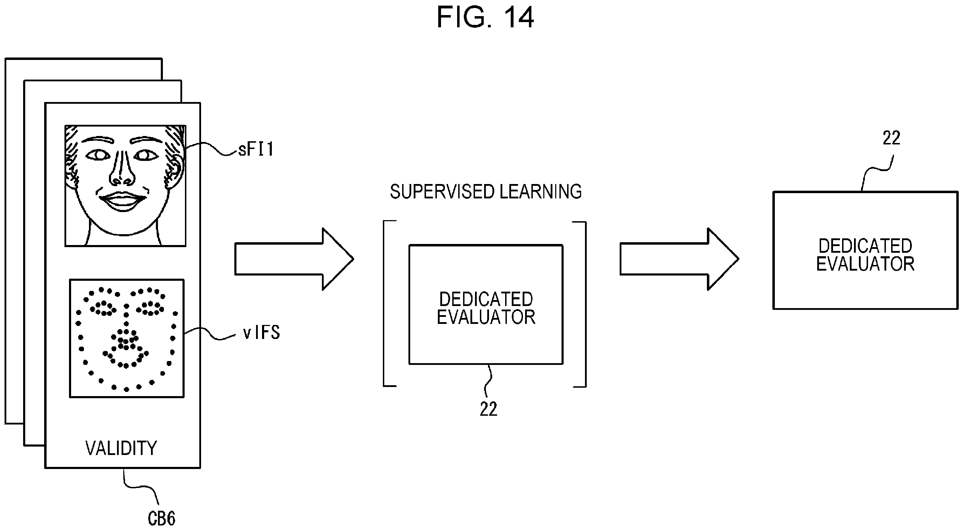

As illustrated in FIG. 14, a plurality of combinations CB6 of a first face image sFI1 of a new occupant, a virtual labeled facial structure vlFS, and a validity is used to construct the dedicated evaluator 22. The dedicated evaluator 22 is constructed by performing supervised learning using the validities as correct answers for the first face images sFI1 and the virtual labeled facial structures vlFS. When the dedicated evaluator 22 has already been constructed, a dedicated evaluator 22 capable of calculating validity for a new occupant is constructed by performing supervised learning on the dedicated evaluator 22 using the validities as correct answers for the first face images sFI1 and the virtual labeled facial structures vlFS. After the dedicated evaluator 22 capable of calculating validity for a new occupant is constructed, data for constructing the dedicated evaluator 22 is generated, and the controller 13 functions as the dedicated evaluator 22 on the basis of the data.

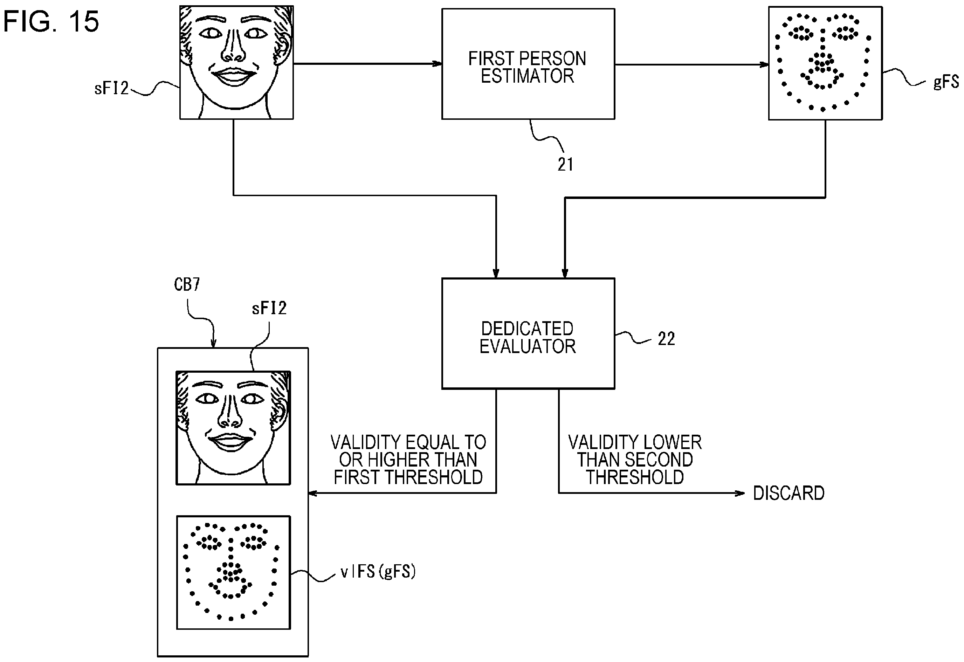

The construction of a second person estimator 18 will be described hereinafter. After the dedicated evaluator 22 capable of calculating validities of facial structures gFS of a person who is a new occupant is constructed, new construction of a second person estimator 18 corresponding to the person starts. As illustrated in FIG. 15, in order to construct the second person estimator 18, a first person estimator 21 corresponding to the new occupant estimates facial structures gFS of second face images sFI2 of the new occupant on the basis of the second face images sFI2. The second face images sFI2 of the new occupant may be the second face images sFI2 used to construct the identifier 17 or the second face images sFI2 generated thereafter by capturing images using the second camera 15.

The dedicated evaluator 22 calculates validities of the second face images sFI2 of the new occupant on the basis of the second face images sFI2 and the estimated facial structures gFS. Second face images sFI2 and facial structures gFS with which calculated validities are equal to or higher than a second threshold are selected. The second threshold may be the same as or different from the first threshold. A plurality of combinations CB7 is generated by combining the selected facial structures gFS with the second face images sFI2 as virtual labeled facial structures vlFS.

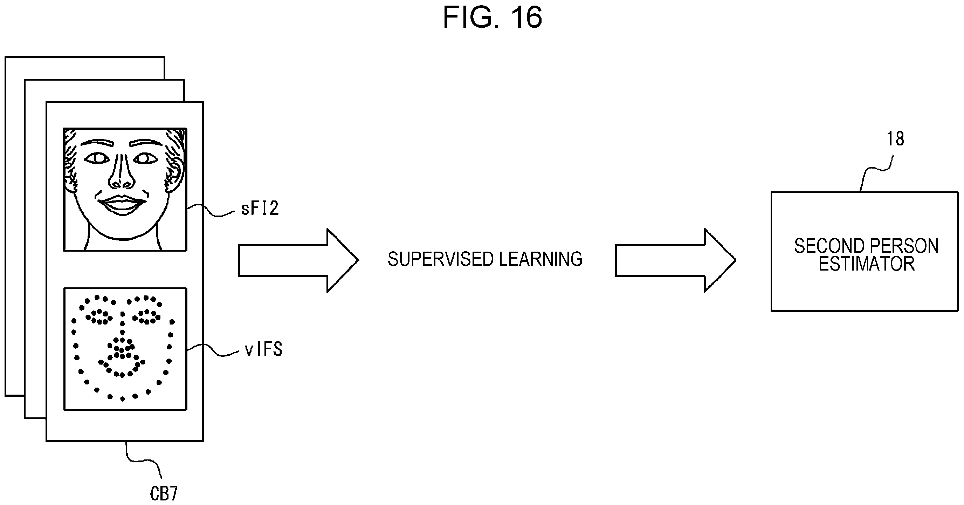

As illustrated in FIG. 16, a second person estimator 18 is constructed by performing supervised learning using the facial structure vlFS as a correct answer for the second face image sFI2 in each of the plurality of generated combinations CB7. After a second person estimator 18 corresponding to a new occupant is constructed, data for constructing the second person estimator 18 is generated, and the controller 13 functions as the second person estimator 18 on the basis of the data. If a person identified by the identifier 17 after the construction of the second person estimator 18 is a person corresponding to the second person estimator 18, the second person estimator 18 estimates facial structures gFS on the basis of second face images sFI2 of the person as described above.

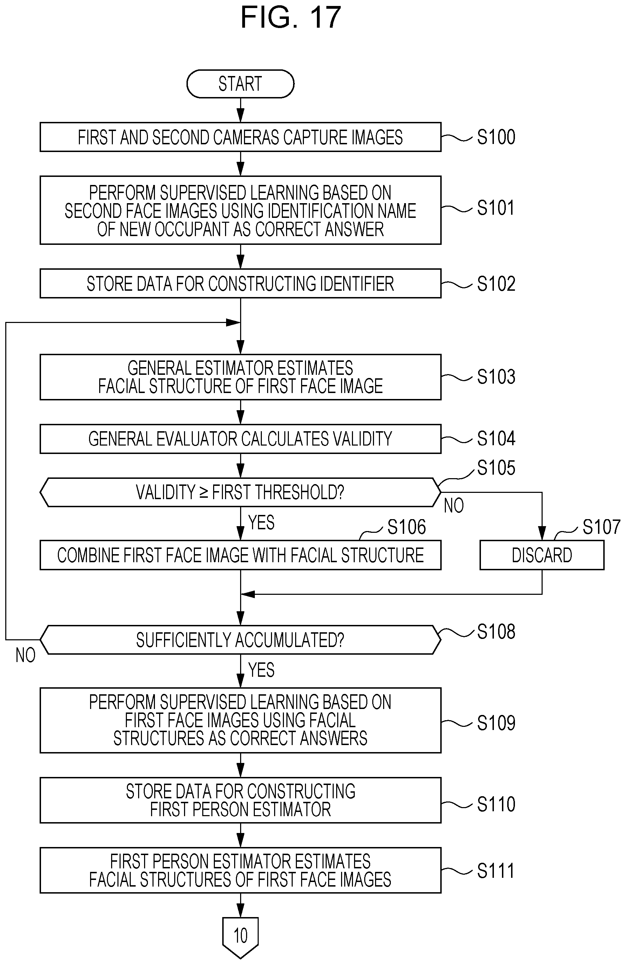

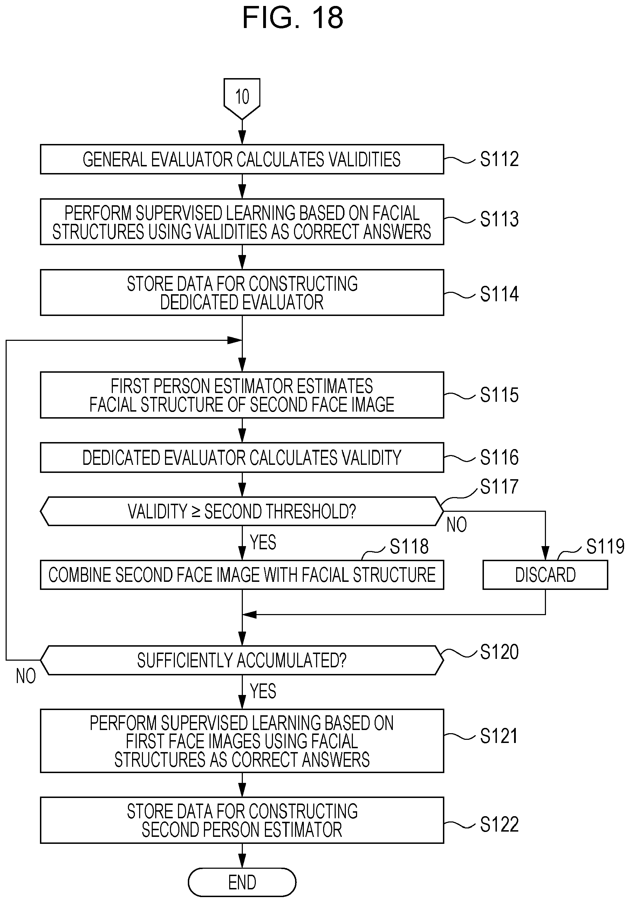

A construction process performed by the controller 13 in the present embodiment will be described with reference to flowcharts of FIGs. 17 and 18. The construction process starts when the second camera 15 captures images of a new occupant as described above.

In step S100, the controller 13 causes the first camera 14 and the second camera 15 to capture images to obtain first face images sFI1 and second face images sFI2 of the new occupant. After the obtainment, the process proceeds to step S101.

In step S101, the controller 13 performs supervised learning using, with an identification name of the new occupant used as a correct answer, the second face images sFI2 of the certain person obtained in step S100. After the supervised learning, the process proceeds to step S102.

In step S102, the controller 13 stores, in the memory 12, data for constructing an identifier 17 capable of identifying the new occupant, the identifier 17 being constructed through the supervised learning in step S101. After the storing, the process proceeds to step S103.

In step S103, the controller 13 causes the general estimator 19 to estimate a facial structure gFS of the certain person on the basis of a first face image sFI1 of the certain person of one frame obtained in step S100. After the estimation, the process proceeds to step S104.

In step S104, the controller 13 causes the general evaluator 20 to calculate a validity of the facial structure gFS estimated in step S103. After the calculation, the process proceeds to step S105.

In step S105, the controller 13 determines whether the validity calculated in step S 104 is equal to or higher than the first threshold. If the validity is equal to or higher than the first threshold, the process proceeds to step S106. If the validity is not equal to or higher than the first threshold, the process proceeds to step S107.

In step S106, the controller 13 combines the first face image sFI1 of the certain person of one frame used in step S103 to estimate the facial structure gFS with the facial structure gFS. After the combining, the process proceeds to step S108.

In step S107, the controller 13 discards the first face image sFI1 of the certain person of one frame used in step S103 to identify the facial structure gFS and the facial structure gFS. After the discard, the process proceeds to step S108.

In step S108, the controller 13 determines whether a sufficient number of combinations CB5 of a first face image sFI1 of the certain person and a facial structure gFS have been accumulated. Whether a sufficient number of combinations CB5 have been accumulated may be determined, for example, by determining whether the number of combinations CB5 exceeds a number of combination threshold. If a sufficient number of combinations CB5 have not been accumulated, the process returns to step S103. If a sufficient number of combinations CB5 have been accumulated, the process proceeds to step S109.

In step S109, the controller 13 performs supervised learning based on the first face images sFI1 of the certain person using the facial structures gFS included in the combinations CB5 as correct answers that are virtual labeled facial structures vlFS. After the supervised learning, the process proceeds to step S110.

In step S110, the controller 13 stores, in the memory 12, data for constructing a first person estimator 21 corresponding to the new person, the first person estimator 21 having been constructed through the supervised learning in step S109. After the storing, the process proceeds to step S111.

In step S111, the controller 13 causes the first person estimator 21 to estimate facial structures gFS based on first face images sFI1 of the certain person included in the combinations CB5 determined in step S108 to have been sufficiently accumulated. After the estimation, the process proceeds to step S112.

In step S112, the controller 13 causes the general evaluator 20 to calculate validities of the facial structures gFS estimated in step S111. After the calculation, the process proceeds to step S113.

In step S113, the controller 13 performs supervised learning based on the estimated facial structures gFS using the validities calculated in step S113 as correct answers. After the supervised learning, the process proceeds to step S114.

In step S114, the controller 13 stores, in the memory 12, data for constructing a dedicated evaluator 22 capable of calculating validity for the new person, the dedicated evaluator 22 having been constructed through the supervised learning in step S113. After the storing, the process proceeds to step S115.

In step S115, the controller 13 causes the first person estimator 21 constructed in step S110 to estimate a facial structure gFS of the certain person based on a second face image sFI2 of the certain person of one frame obtained in step S100. After the estimation, the process proceeds to step S116.

In step S116, the controller 13 causes the dedicated evaluator 22 constructed in step S114 to calculate a validity of the facial structure gFS estimated in step S115. After the calculation, the process proceeds to step S117.

In step S117, the controller 13 determines whether the validity calculated in step S 116 is equal to or higher than the second threshold. If the validity is equal to or higher than the second threshold, the process proceeds to step S118. If the validity is not equal to or higher than the second threshold, the process proceeds to step S119.

In step S118, the controller 13 combines the second face image sFI2 of the certain person of one frame used in step S115 to estimate the facial structure gFS with the facial structure gFS. After the combining, the process proceeds to step S120.

In step S119, the controller 13 discards the second face image sFI2 of the certain person of one frame used in step S115 to identify the facial structure gFS and the facial structure gFS. After the discard, the process proceeds to step S120.

In step S120, the controller 13 determines whether a sufficient number of combinations CB7 of a second face image sFI2 of the certain person and a facial structure gFS have been accumulated. Whether a sufficient number of combinations CB7 have been accumulated may be determined, for example, on the basis of whether the number of combinations CB7 exceeds a number of combinations threshold. If a sufficient number of combinations CB7 have not been accumulated, the process returns to step S115. If a sufficient number of combinations CB7 have been accumulated, the process proceeds to step S121.

In step S121, the controller 13 performs supervised learning based on the second face images sFI2 of the certain person using the facial structures gFS included in the combinations CB7 as correct answers that are virtual labeled facial structures vlFS. After the supervised learning, the process proceeds to step S122.

In step S122, the controller 13 stores, in the memory 12, data for constructing a second person estimator 18 corresponding to the new person, the second person estimator 18 having been constructed through the supervised learning in step S121. After the storing, the construction process ends.

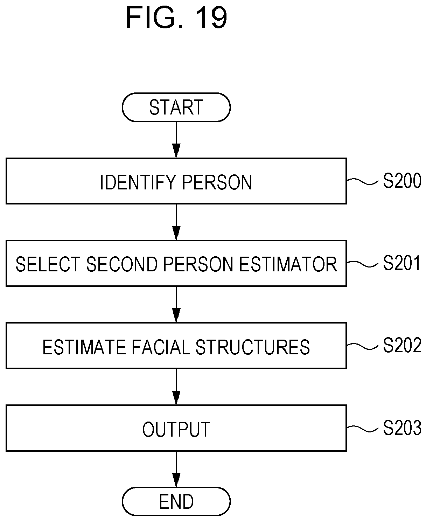

The estimation process performed by the controller 13 in the present embodiment will be described using a flowchart of FIG. 19. The estimation process starts when the second camera 15 captures images of an existing occupant.

In step S200, the controller 13 causes the identifier 17 to identify a person on the basis of the second face images captured by the second camera 15. After the identification, the process proceeds to step S201.

In step S201, the controller 13 selects a second person estimator 18 corresponding to the person identified in step S200. After the selection, the process proceeds to step S202.

In step S202, the controller 13 causes the second person estimator 18 selected in step S201 to estimate facial structures gFS on the basis of the second face images used in step S200 to identify the person. After the estimation, the process proceeds to step S203.

In step S203, the controller 13 outputs the facial structures gFS estimated in step S202 to the external device 16. After the outputting, the estimation process ends.

With the facial structure estimation apparatus 10 according to the present embodiment having the above configuration, the controller 13 functions as a first person estimator 21 constructed by causing the general estimator 19 to estimate facial structures gFS of first face images sFI1 of a new occupant (target) on the basis of the first face images sFI1 and the general evaluator 20 to calculate validities of the facial structures gFS, selecting facial structures gFS whose validities are equal to or higher than the first threshold, and performing learning using the selected facial structures gFS and the first face images sFI1 corresponding to the selected facial structures gFS. The controller 13 also functions as a dedicated evaluator 22 for which learning is performed using facial structures gFS estimated by the first person estimator 21 on the basis of the first face images sFI1 corresponding to the selected facial structures gFS and validities calculated by the general evaluator 20 on the basis of the facial structures gFS and the first face images sFI1 corresponding to the facial structures gFS. The controller 13 also functions as a second person estimator 18 that is constructed for the new occupant by causing the first person estimator 21 to estimate facial structures gFS of second face images sFI2 of the new occupant on the basis of the second face images sFI2 and the dedicated evaluator 22 to calculate validities of the facial structures gFS, selecting facial structures gFS whose validities are equal to or higher than the second threshold, and performing learning using the selected facial structures gFS and the second face images sFI2 corresponding to the facial structures gFS and that, if the identifier 17 identifies, after the construction, a person in the second face images is the new occupant, estimates and outputs the facial structures gFS on the basis of the second face images sFI2. With this configuration, the facial structure estimation apparatus 10 constructs a first person estimator 21 corresponding to a certain person using the general estimator 19 constructed on the basis of publicly available labeled facial structures IFS for first face images and first face images sFI1 of the certain person and a second person estimator 18 corresponding to the certain person using second face images sFI2 of the certain person. The facial structure estimation apparatus 10, therefore, can improve accuracy of estimating facial structures gFS on the basis of the second face images sFI2, whose band is different from that of the first face images included in publicly available learning data.

An embodiment of the invention in the present disclosure is a facial structure estimation apparatus including an estimator storing, as learning data, parameters indicating relationships between face images and structures of the face images. The estimator learns relationships between first face images including RGB information and facial structures corresponding to the first face images, relationships between second face images of a certain person including RGB information and facial structures corresponding to the second face images, and relationships between second face images of the certain person detected using infrared light and facial structures corresponding to the second face images. Face images including RGB information in the present disclosure refer to face images including color information data regarding R (red), G (green), and B (blue). In the face images including RGB information, the color information data regarding R (red), G (green), and B (blue) may be replaced by other colors, or the face images may include color information data regarding other colors, instead.

Another embodiment of the invention in the present disclosure is a facial structure estimation apparatus that estimates a facial structure of a certain person using learned relationships between second face images of the certain person detected using infrared light and facial structures corresponding to the second face images. Face images of a certain person detected using infrared light in the present disclosure may be images based on data obtained from radio waves infrared light radiated onto a person and reflected from the person.

Another embodiment of the invention in the present disclosure is a facial structure estimation apparatus including an outputter that outputs a validity of the estimated facial structure of the certain person.

Although the present invention has been described on the basis of the drawings and the examples, note that those skilled in the art can easily change or correct the present invention in various ways on the basis of the present disclosure. Note, therefore, that the scope of the present invention also includes such changes and corrections.

### [Appendix 1]

A facial structure estimation apparatus includes
an obtainer that obtains a first face image including a component in a first band and a second face image including a component in a second band, and
a controller that outputs a facial structure of the second face image,
in which the controller functions as
an identifier that identifies a person in the second face image obtained by the obtainer on the basis of the second face image,
a general estimator that estimates a facial structure of the first face image obtained by the obtainer on the basis of the first face image,
a general evaluator that calculates a validity of the facial structure estimated by the general estimator,
a first person estimator constructed by causing the general estimator to estimate facial structures of first face images of a new target obtained by the obtainer on the basis of the first face images and the general evaluator to calculate validities of the facial structures, selecting facial structures whose validities are equal to or higher than a first threshold, and performing learning using the selected facial structures and the first face images corresponding to the selected facial structures,
a dedicated evaluator for which learning is performed using facial structures estimated by the first person estimator on the basis of the first face images corresponding to the selected facial structures and validities calculated by the general evaluator on the basis of the facial structures and the first face images corresponding to the facial structures, and
a second person estimator that is constructed for the new target by causing the first person estimator to estimate facial structures of second face images of the new target obtained by the obtainer on the basis of the second face images and the dedicated evaluator to calculate validities of the facial structures, selecting facial structures whose validities are equal to higher than a second threshold, and performing learning using the selected facial structures and the second face images corresponding to the facial structures and that, when the identifier identifies, after the construction, a person in a second face image, which is obtained by the obtainer, is the new target, estimates and outputs a facial structure on the basis of the second face image.

### [Appendix 2]

The facial structure estimation apparatus according to appendix 1,
wherein the first band is at least a part of a visible light range.

### [Appendix 3]

The facial structure estimation apparatus according to appendix 1 or 2,
wherein the second band is at least a part of an infrared range.

### [Appendix 4]

A method for estimating a facial structure includes
obtaining a first face image including a component in a first band and a second face image including a component in a second band, and
outputting a facial structure of the second face image,
in which the outputting includes
identifying a person in the second face image obtained in the obtaining on the basis of the second face image,
estimating a facial structure of the first face image obtained in the obtaining on the basis of the first face image,
calculating a validity of the facial structure estimated in the estimating a facial structure of the first face image,
estimating, in the estimating a facial structure of the first face image, facial structures of first face images of a new target obtained in the obtaining on the basis of the first face images, calculating, in the calculating, validities of the facial structures, selecting facial structures whose validities are equal to or higher than a first threshold, and performing learning using the selected facial structures and the first face images corresponding to the selected facial structures,
performing learning using facial structures estimated in the estimating facial structures of first face images on the basis of the first face images corresponding to the selected facial structures and validities calculated in calculating on the basis of the facial structures and the first face images corresponding to the facial structures, and
estimating, for the new target in the estimating facial structures of first face images, facial structures of second face images of the new target obtained in the obtaining on the basis of the second face images, calculating, in the performing, validities of the facial structures, selecting facial structures whose validities are equal to higher than a second threshold, performing learning using the selected facial structures and the second face images corresponding to the facial structures, and estimating and outputting, when a person in a second face image, which is obtained in the obtaining, identified after the construction in the identifying is the new target, a facial structure on the basis of the second face image.

### [Appendix 5]

A program for estimating a facial structure causes a computer to include
an obtainer that obtains a first face image including a component in a first band and a second face image including a component in a second band, and
a controller that outputs a facial structure of the second face image,
in which the controller functions as
an identifier that identifies a person in the second face image obtained by the obtainer on the basis of the second face image,
a general estimator that estimates a facial structure of the first face image obtained by the obtainer on the basis of the first face image,
a general evaluator that calculates a validity of the facial structure estimated by the general estimator,
a first person estimator constructed by causing the general estimator to estimate facial structures of first face images of a new target obtained by the obtainer on the basis of the first face images and the general evaluator to calculate validities of the facial structures, selecting facial structures whose validities are equal to or higher than a first threshold, and performing learning using the selected facial structures and the first face images corresponding to the selected facial structures,
a dedicated evaluator for which learning is performed using facial structures estimated by the first person estimator on the basis of the first face images corresponding to the selected facial structures and validities calculated by the general evaluator on the basis of the facial structures and the first face images corresponding to the facial structures, and
a second person estimator that is constructed for the new target by causing the first person estimator to estimate facial structures of second face images of the new target obtained by the obtainer on the basis of the second face images and the dedicated evaluator to calculate validities of the facial structures, selecting facial structures whose validities are equal to higher than a second threshold, and performing learning using the selected facial structures and the second face images corresponding to the facial structures and that, when the identifier identifies, after the construction, a person in a second face image, which is obtained by the obtainer, is the new target, estimates and outputs a facial structure on the basis of the second face image.

### REFERENCE SIGNS

- 10: facial structure estimation apparatus

- 11: obtainer
- 12: memory
- 13: controller
- 14: first camera
- 15: second camera
- 16: external device
- 17: identifier
- 18: second person estimator
- 19: general estimator
- 19a: primary general estimator
- 19b: secondary general estimator
- 20: general evaluator
- 20a: primary general evaluator
- 20b: secondary general evaluator
- 21: first person estimator
- 22: dedicated evaluator
- CB1: combination of first face image and labeled facial structure
- CB2: combination of first face image, labeled facial structure, and validity
- CB3: combination of first face image and virtual labeled facial structure
- CB4: combination of first face image. virtual labeled facial structure, and validity
- CB5: combination of first face image of certain person and virtual labeled facial structure
- CB6: combination of face image of certain person. virtual labeled facial structure, and validity
- CB5: combination of second face image of certain person and virtual labeled facial structure
- FI1: first face image
- lFS: labeled facial structure
- gFS: estimated facial structure
- sFI1: first face image of new occupant
- sFI2: second face image of new occupant
- vlFS: virtual labeled facial structure

## Claims

1. A facial structure estimation apparatus comprising:
an estimator storing, as learning data, a parameter indicating a relationship between a structure of the face image,
wherein the estimator learns a relationship between a first face image including RGB information and a facial structure corresponding to the first face image, a relationship between a second face image of a certain person including RGB information and a facial structure corresponding to the second face image, and a relationship between a second face image of the certain person detected using infrared light and a facial structure corresponding to the second face image.

2. The facial structure estimation apparatus according to claim 1,
wherein a facial structure of the certain person is estimated using the learned relationship between the second face image of the certain person detected using infrared light and the facial structure corresponding to the second face image.

3. The facial structure estimation apparatus according to claim 2, further comprising:
an outputter that outputs a validity of the estimated facial structure of the certain person.

4. A method for estimating a facial structure, the method comprising:
a first learning step, in which an estimator storing, as learning data, a parameter indicating a relationship between a face image and a structure of the face image learns a relationship between a first face image including RGB information and a facial structure corresponding to the first face image;
a second learning step, in which the estimator learns a relationship between a second face image of a certain person including RGB information and a facial structure corresponding to the second face image; and
a third learning step, in which the estimator learns a relationship between a second face image of the certain person detected using infrared light and a facial structure corresponding to the second face image.

5. The method for estimating a facial structure according to claim 3,
wherein a facial structure of the certain person is estimated using the learned relationship between the second face image of the certain person detected using infrared light and the facial structure corresponding to the second face image.

6. The method for estimating a facial structure according to claim 5, further comprising:
an outputter that outputs a validity of the estimated facial structure of the certain person.

7. A program for estimating a facial structure causing an estimator indicating a parameter indicating a relationship between a first face image including RGB information and a facial structure corresponding to the first face image to perform a process comprising:
a first learning step, in which the relationship between a first face image including RGB information and a facial structure corresponding to the first face image is learned;
a second learning step, in which a relationship between a second face image of a certain person including RGB information and a facial structure corresponding to the second face image is learned; and
a third learning step, in which a relationship between a second face image of the certain person detected using infrared light and a facial structure corresponding to the second face image is learned.

8. The program for estimating a facial structure according to claim 7,
wherein a facial structure of the certain person is estimated using the learned relationship between the second face image of the certain person detected using infrared light and the facial structure corresponding to the second face image.

9. The program for estimating a facial structure according to claim 8, further comprising:
an outputter that outputs a validity of the estimated facial structure of the certain person.
